# EUROPÄISCHE PATENTSCHRIFT

(11) **EP 0 548 713 B1**
(45) Veröffentlichungstag und Bekanntmachung des Hinweises auf die Patenterteilung: **23.08.1995**
(21) Anmeldenummer: 92121163.7
(22) Anmeldetag: 11.12.1992
(51) Int. Cl.: H01G 2/14

(54) **Elektrischer Kondensator**
Electrical capacitor
Condensateur électrique

(30) Priorität: 20.12.1991 DE 4142467
(43) Veröffentlichungstag der Anmeldung: 30.06.1993
(73) Patentinhaber: SIEMENS MATSUSHITA COMPONENTS GmbH & CO KG, 81541 München (DE)
(72) Erfinder: Utner, Ferdinand, Obering., W-8400 Regensburg (DE)
(74) Vertreter: Fuchs, Franz-Josef, Dr.-Ing.

(56) Entgegenhaltungen:
- EP-A- 0 132 634
- DE-A- 3 440 683
- ELEKTROTECHNIK Bd. 73, Nr. 12, 17. Dezember 1991, WüRZBURG DE,Seiten 38 - 42;R.ROBL 'Metallpapier-Kondensatoren erfüllen strenge Sicherheitsanforderungen'

## Beschreibung

Die Erfindung betrifft einen elektrischen Kondensator, der in ein, insbesondere rechteckförmiges, Gehäuse eingebaut ist, das eine Sicherung aufweist, die den Kondensator bei einem Druckanstieg im Gehäuse von einem äußeren Stromkreis freischaltet, indem eine im Inneren des Gehäuses angeordnete metallische Leitung an einer Soll-Trennstelle aufgetrennt wird.

Ein derartiger Kondensator ist aus der DE 34 40 683 A1 bekannt.

Abschaltsicherungen für Kondensatoren sind aus dem Stand der Technik in großer Anzahl bekannt. Sie haben die Aufgabe, bei einem im Kondensatorgehäuse entstehenden Überdruck den Kondensator von einer äußeren Stromquelle freizuschalten. Der Überdruck kann durch das in vielen Selbstheilprozessen gebildete Gas erzeugt werden, oder aber auch bei mit einer dielektrischen Flüssigkeit imprägnierten Kondensatoren durch Zersetzung des Imprägniermittels bei Spannungsdurchschlägen. Bei den genannten Prozessen kann ein derart hoher Druckaufbau im Gehäuse stattfinden, daß das Gehäuse explosionsartig zerstört wird. Die aus dem Stand der Technik bekannten Lösungen für Abschaltsicherungen setzen im allgemeinen ein zylinderförmiges Gehäuse voraus. Die Abschaltsicherungen sind entweder im Deckel oder Boden verankert, die beispielsweise in Form einer Arbeitsmembran bei Druckanstiegen im Gehäuse die Abschaltsicherung betätigen.

Bei rechteckförmigen Kondensatorgehäusen sind die Voraussetzungen zum Betätigen einer Abschaltsicherung aus folgenden Gründen wesentlich ungünstiger als bei zylindrischen Kondensatorgehäusen. So weisen z. B. Rechteckgehäuse (Dimension ca. 340 x 720 x 150 mm³) bei geringem Überdruck (z. B. 0,5 bar) bereits große Ausbeulungen (ca. 2 x 10 mm) an den großen Seitenflächen auf, während praktisch keine Ausbeulung von Deckel und Boden vorhanden ist. Ein zylindrisches Gehäuse (Dimension φ 176 x 800 mm³) weist auch bei großen Überdrucken (z. B. 10 bar) keine wesentliche Ausbeulung des Mantels ( > 0,5 mm) auf, wogegen Durchwölbungen von Boden und Deckel z. B. schon ab ≧ 1,5 bar möglich sind.

Weiterhin sind bei Rechteckgehäusen wegen der geringen Stabilität der großen Mantelflächen bei großen Ausdehnungen nur geringe Kräfte zur Leitungsunterbrechung vorhanden. Ein schnelles und weites Trennen der Leitung (Snap-Effekt) ist nur durch großen Zusatzaufwand möglich. Bei zylindrischen Gehäusen sind dagegen durch den stabilen Mantel höhere Abschaltdrücke und Kräfte möglich und nach Wunsch dimensionierbar. Die Leitungsunterbrechung kann schnell und weit durch entsprechende Bodendimensionierung (Snap-Boden) ermöglicht werden.

Bei Rechteckgehäusen sind weiterhin bei Anordnung der Abschaltsicherung im Wickelpaket Isolationsprobleme wegen Herausführung der Anschlüsse gegeben. Bei dem aus der DE 34 40 683 A1 bekannten Kondensator führt die Verankerung der Abschaltsicherung im Deckel zu einem großen Einbauvolumenverlust, wogegen bei zylindrischem Gehäuse die Sicherung in den Kernrohren angeordnet werden kann und auch bei in einer Reihe übereinandergestapelten Wickeln möglich ist. Es ergeben sich hiermit ein geringer Einbauvolumenverlust, geringe Isolationsprobleme und eine relativ einfache Montage.

Aufgabe der Erfindung ist es daher, eine Abschaltsicherung für einen elektrischen Kondensator der eingangsgenannten Art anzugeben, welcher bei geringen Kräften (Überdrücken) ein sicheres Abschalten ermöglicht, geringe Abmessungen (wenig Einbauvolumenverlust) aufweist, leicht zu montieren und kostengünstiger als die bisherigen Sicherungssysteme bei Großkondensatoren herzustellen ist. Die Abschaltsicherung soll bei einem bestimmten Überdruck im Kondensatorgehäuse das Wickelpaket sicher vom Kondensatoranschluß trennen und diese Trennung auch bei einem Druckabbau aufrecht erhalten.

Diese Aufgabe wird erfindungsgemäß dadurch gelöst, daß die metallische Leitung zwischen zwei mit Scherkanten versehenen kunststoffteilen gehaltert ist, die bei einem Druckanstieg im Gehäuse eine Relativbewegung gegeneinander ausführen derart, daß die metallische Leitung an der im Bereich der Scherkanten angeordneten Soll-Trennstelle durchtrennt wird.

Zweckmäßige Ausgestaltungen sind in den Unteransprüchen angeführt.

Die Erfindung wird anhand der folgenden Ausführungsbeispiele erläutert.

In der dazugehörenden Zeichnung zeigen
- FIG 1 bis 3: eine Abschaltvorrichtung nach der Erfindung in verschiedenen Seitenansichten,
- FIG 4a bis 4d: Einzelheiten aus FIG 1 im Bereich der Soll-Trenn-Trennstelle,
- FIG 5a und 5b: unterschiedliche Befestigungsarten für die Abschaltvorrichtung,
- FIG 6: die Abschaltvorrichtung nach FIG 1 im unterbrochenen Zustand,
- FIG 7 bis 15: verschiedene Ausformungen einer Abschaltsicherung, die am Kondensatordeckel befestigt ist und
- FIG 16 und 17: Abschaltvorrichtungen, die durch Ausbauchen der großen Seitenwände betätigt werden.

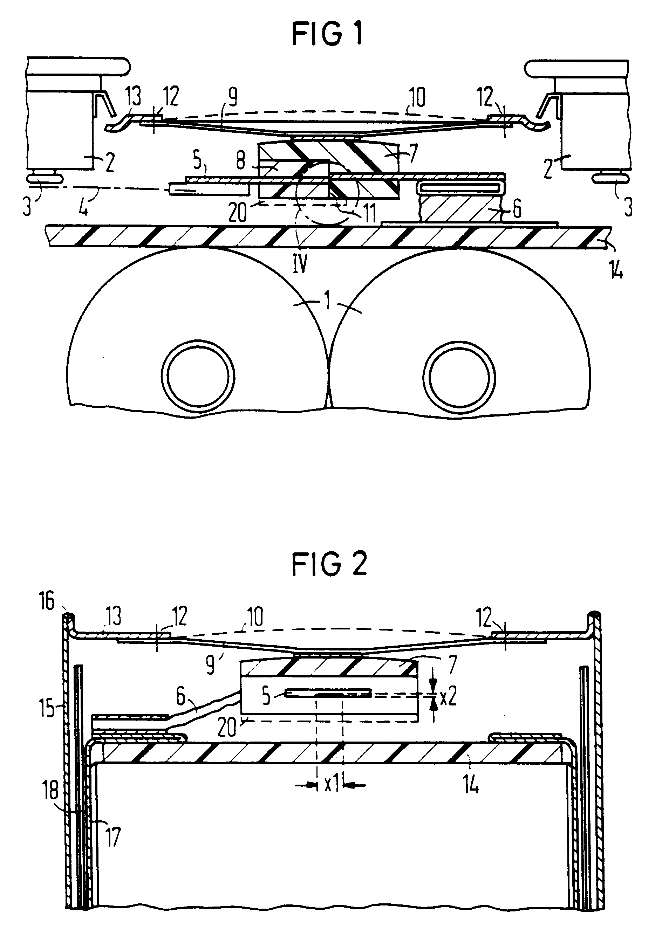

FIG 1 zeigt zwei Kondensatorwickel 1, die in ein (in der FIG nicht dargestelltes) rechteckförmiges Metallgehäuse eingebaut sind. Im Deckelteil des Gehäuses sind Keramikdurchführungen 2 mit Anschlußelementen 3 angeordnet. Die Anschlußelemente 3 werden mit den Kondensatorwickeln 1 verschaltet. Von einem der Anschlußelemente 3 führt eine flexible Leitung 4 zu einer metallischen Leitung 5 mit dem Sicherungselement. Am anderen Anschluß der metallischen Leitung 5 ist eine weitere flexible Leitung 6 befestigt, die zu einem der Kondensatoranschlüsse führt. Das andere (in der FIG rechte) Anschlußelement 3 ist mit dem zweiten Kondensatoranschluß verbunden.

Die metallische Leitung 5 mit dem Sicherungselement ist durch zwei Kunststoffteile 7, 8 geführt. Das Kunststoffteil 7 ist an einem Membrandeckel 9 angeordnet, wogegen das Kunststoffteil 8 feststehend angeordnet ist.

Bei Druckanstieg im Gehäuse springt der Membrandeckel 9 in die gestrichelt dargestellte Stellung 10, wodurch die Kunststoffteile 7 und 8 eine Relativbewegung gegeneinander ausführen. Die zwischen den Kunststoffteilen 7, 8 angeordnete metallische Leitung 5 wird dabei durchtrennt, wobei im Bereich der Scherkanten 11 zwischen den Kunststoffteilen 7 und 8 eine Soll-Trennstelle in der metallischen Leitung 5 angebracht ist.

Der Membrandeckel 9 ist an den Schweiß- und/oder Lötstellen 12 mit dem Gehäusedeckel 13 verbunden.

Zwischen Kondensatorwickel 1 und Abschaltvorrichtung ist eine isolierende Druckplatte 14 angeordnet.

FIG 2 zeigt eine Seitenansicht von rechts der in FIG 1 dargestellten Abschaltvorrichtung. In der FIG 2 ist zu erkennen, daß der Deckel 13 mit der Wand des Gehäuses 15 an der Schweißstelle 16 gasdicht miteinander verbunden ist. Ferner ist in der FIG 2 zu erkennen, daß die flexible Leitung 6 mit einer Wickelverdrahtung 17 verbunden ist. Zwischen Wickelverdrahtung 17 und Gehäusewandung 15 ist eine Isolierung 18 angeordnet. Im übrigen sind in der FIG 2 (wie auch in den folgenden FIG) gleiche Elemente mit gleichem Bezugszeichen versehen.

Mit x₁ und x₂ ist der verminderte Leitungsquerschnitt in der metallischen Leitung 5 im Bereich der Scherkante bezeichnet.

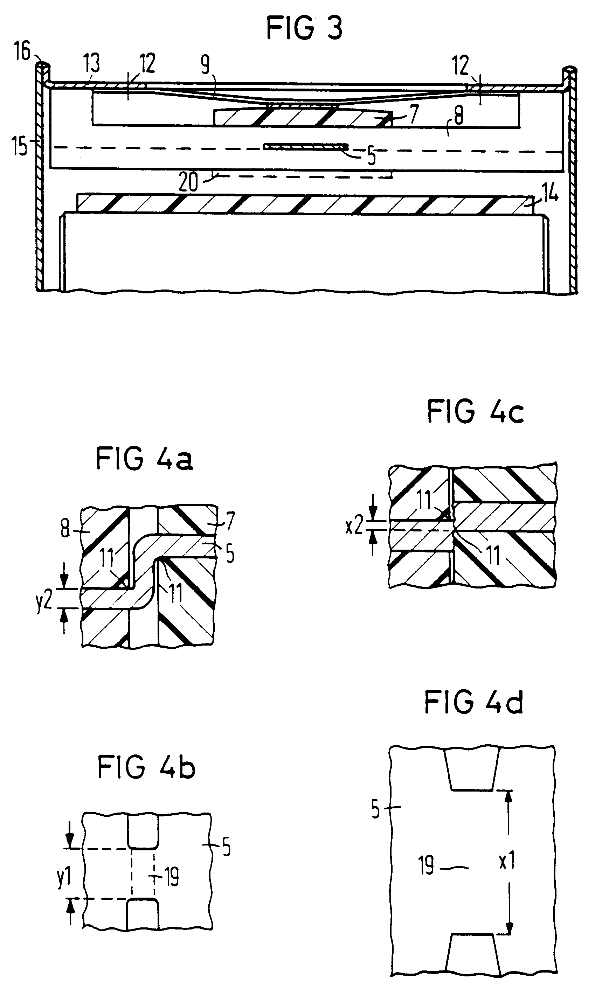

FIG 3 zeigt eine Ansicht der FIG 1 von der linken Seite. In dieser FIG ist zu erkennen, daß das feststehende Kunststoffteil 8 am Deckel 13 abgestützt ist, so daß dieses Teil 8 bei Druckanstieg im Kondensatorgehäuse 15 feststeht und keine Bewegung ausführen kann.

In den FIG 4a bis 4d sind vergrößerte Einzelheiten im Bereich der Scherkante 11 (siehe FIG 1) dargestellt. Hier ist die Soll-Trennstelle 19 zu erkennen, die in der metallischen Leitung 5 im Bereich der Scherkante 11 angeordnet ist. Die Soll-Trennstellen 19 weisen verminderte Querschnitte x₁, x₂, y₁, y₂ auf.

Den FIG 1 bis 3 ist zu entnehmen, daß das für den Wickeleinbau nutzbare Gehäusevolumen größtmöglich für das Wickelpaket mit Verdrahtung/Isolation genutzt werden kann.

Zusätzliche Aufwendungen für die mechanische Anbindung der Sicherung werden vermieden, da das Sicherungssystem an der Innenseite des Deckels zwischen den Keramik-Durchführungen bei gleichzeitig geringer Einbauhöhe montiert werden kann.

Gleichzeitig wird der zu durchtrennende Sicherungsquerschnitt (z. B. 10 % des normalen Verdrahtungsquerschnittes) so gestaltet, daß der benötigte Kraftaufwand ein Minimum beträgt. Die metallische Leitung 5 mit dem zu unterbrechenden, verringerten Querschnitt 19 ist so ausgelegt, daß ein Abscheren möglich wird, weil bei Elektro-Kupfer (z. B. E-Cu 57 F 20) die Abscherfestigkeit mit ca. 165 N/mm² gegenüber der Zugfestigkeit (ca. 220 bis 250 N/mm²) um ca. 25 bis 35 % geringer ist, so daß deshalb auch die Abschaltkräfte entsprechend geringer sind. Dadurch spricht die Sicherung bereits bei geringerer Kondensatorgehäuseverformung an.

Hinzu kommt, daß bei einem Abreißen (die bisherigen Sicherungen werden auf Zug beansprucht) gegenüber einem Abscheren wegen der hohen Bruchdehnung des Kupfers (ca. 10 bis 38 % je nach Festigkeit) ein längerer (2 bis 2,5-facher) Abschalt-/Snap-Weg bei gleicher Isolationsstrecke (z. B. 5 mm) nach erfolgter Unterbrechung benötigt wird.

Der verringerte Querschnitt kann z. B. durch einen "unterbrochenen Schnitt" (Schnittstempel schneidet z. B. nur 70 % der Kupfer-Blech-Dicke durch) mit breiterem Sicherungssteg (siehe FIG 4c und 4d) oder durch einen normalen Schnitt - eventuell mit anschließender Biegung (siehe FIG 4a und 4b) hergestellt werden.

Natürlich ist mit diesem Abschaltsystem auch ein kombiniertes Abreißen/Abscheren wie auch nur ein Abreißen (Beanspruchen) möglich.

Die metallische Leitung 5 kann einen rechteckigen, runden oder auch anders geformten Querschnitt besitzen. Der konstruktive Aufbau der Abschaltsicherung besteht neben der metallischen Leitung 5 aus nur zwei Kunststoffteilen 7, 8, wovon eines an die unter Druck sich verformende Fläche (z. B. Membran/Snap-Blech oder große Gehäuse-Seitenflächen oder Boden) mechanisch angebunden wird, während das zweite Kunststoffteil 8 feststeht, d. h. sich am Deckel 13 oder Seitenflächen über z. B. angeschweißte Winkel abstützt.

Als Schutz gegen ein Eindrücken der Membran 9 entgegen der Druckrichtung und damit einer falschen Belastung des Sicherungsquerschnittes wird dem feststehenden Kunststoffteil 8 ein Anschlag 20 angeformt (in den FIG strichliert gezeichnet). Eine derartige Belastung in "falscher" Richtung könnte auch bei einem Unterdruck im Kondensatorgehäuse 15 auftreten.

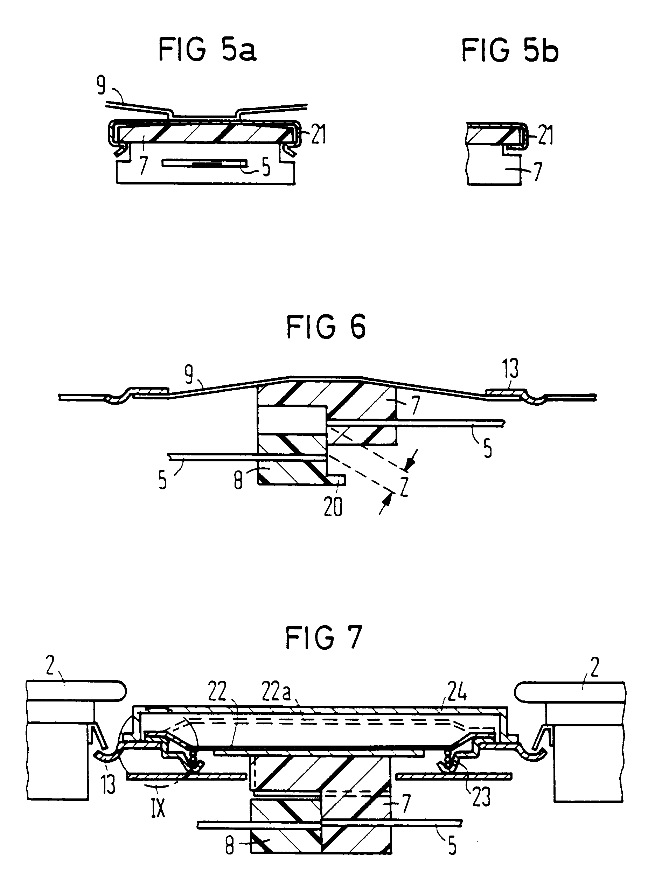

Die Fügung des beweglichen Kunststoffteiles 7 mit der Membran 9 kann entweder direkt durch Ankleben oder über an die Membran angeschweißte Winkel bzw. Federbügel 21 erfolgen, wie es in den FIG 5a und 5b dargestellt ist.

Die metallische Leitung 5 wird so in die Kunststoffteile 7, 8 geschoben, daß jeweils eine Kante der Teile als Scherkante 11 wirkt, wobei sich nur das an die Membran-/Snap-Blech 9 angebundene Teil 7 in Druckrichtung bewegt.

Als druckabhängiges Triebelement (Antrieb) für die Sicherung können entweder eine eingeschweißte und/oder gelötete Membran, ein Snap-Blech oder Bälge dienen.

In FIG 6 ist die unterbrochene Abschaltvorrichtung dargestellt, wenn durch Druckanstieg im Kondensatorgehäuse der Membrandeckel 9 nach oben geschnellt ist. Die im Bereich der Soll-Trennstelle aufgetrennte metallische Leitung 5 weist nach ansprechender Abschaltvorrichtung eine Isolationsstrecke Z auf, wodurch Kriechströme nach der Trennung vermieden werden.

In FIG 7 ist die Ausführungsform eines Snap-Deckels 22 mit vorgespannter Feder 23 dargestellt. Nach Druckanstieg im Gehäuse befindet sich der Snap-Deckel 22 in der oberen Stellung 22a. Als Anschlagsbegrenzung kann ein Kunststoffteil 24 über dem Snap-Deckel 22 angeordnet sein.

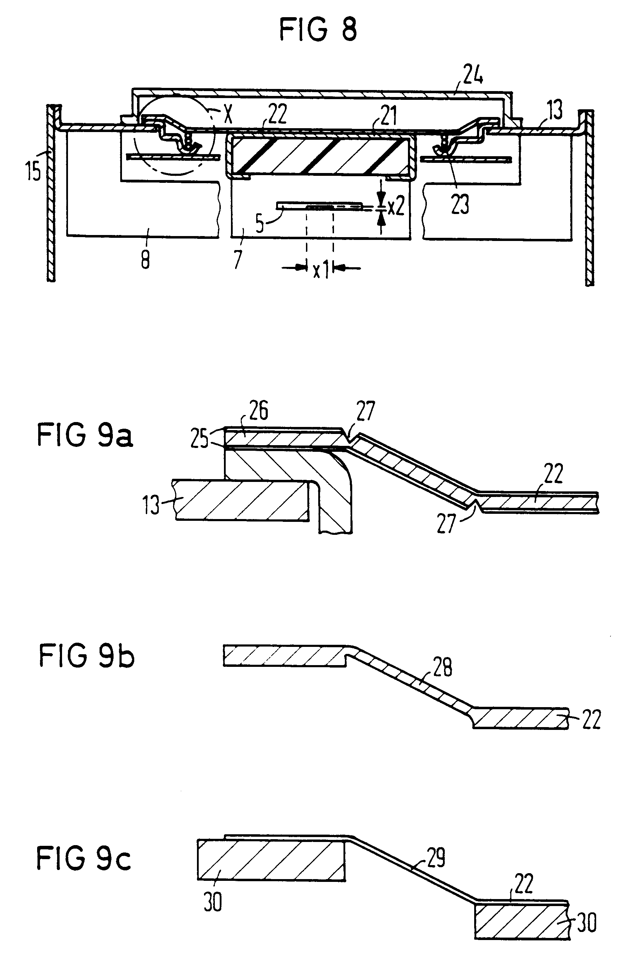

In FIG 8 ist eine Seitenansicht der FIG 7 dargestellt.

FIG 9a bis 9c zeigen vergrößerte Ausschnitte aus FIG 7. Der Snap-Deckel 22 besteht aus mit Kupfer 25 beschichtetem Aluminiumblech 26 und weist Kerben 27 auf.

FIG 9b zeigt eine weitere Ausführungsform, wobei am Rande des Snap-Deckels 22 ein Gelenkband 28 angeordnet ist.

FIG 9c zeigt einen Snap-Deckel 22 mit einem am Rande angeordneten Snap-Federdeckel 29 und aufgeschweißten Verstärkungen 30.

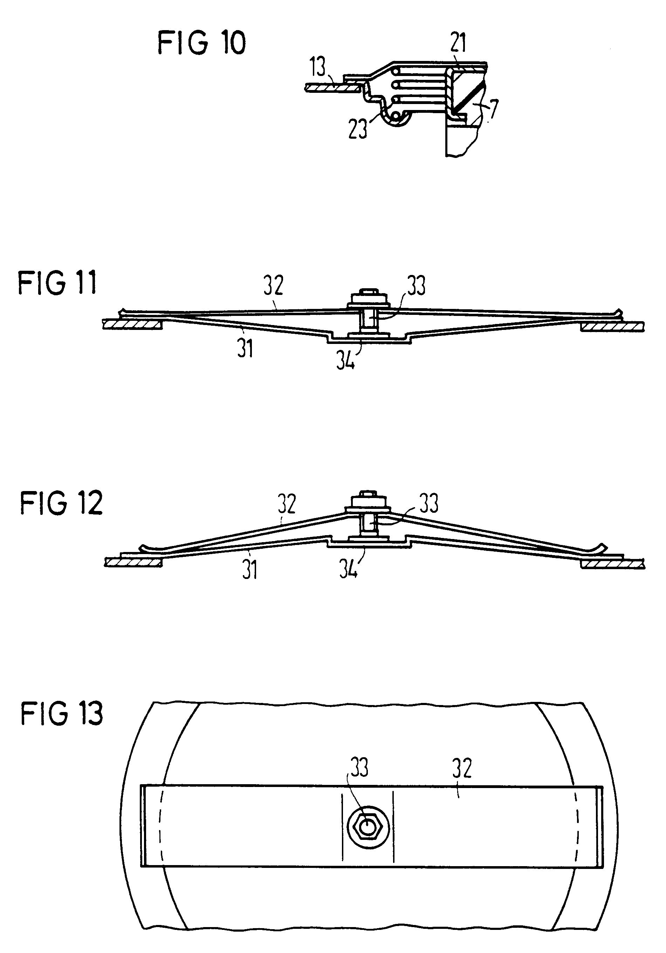

FIG 10 zeigt den vergrößerten Randbereich aus FIG 8 nach Ansprechen der Abschaltvorrichtung mit der entspannten Druckfeder 23.

In den FIG 11 bis 13 ist eine Membran 31 mit vorgespannter Blattfeder 32 dargestellt, die durch einen an die Membran 31 geschweißten Bolzen 33 gehaltert wird. Mit 34 ist die Montagefläche zur Anbringung des beweglichen Kunststoffteils 7 bezeichnet.

In FIG 11 ist die Membranstellung vor dem Druck-Schaltvorgang in FIG 12 nach dem Druck-Abschaltvorgang dargestellt.

Die FIG 13 zeigt eine Draufsicht auf die FIG 11 bzw. 12.

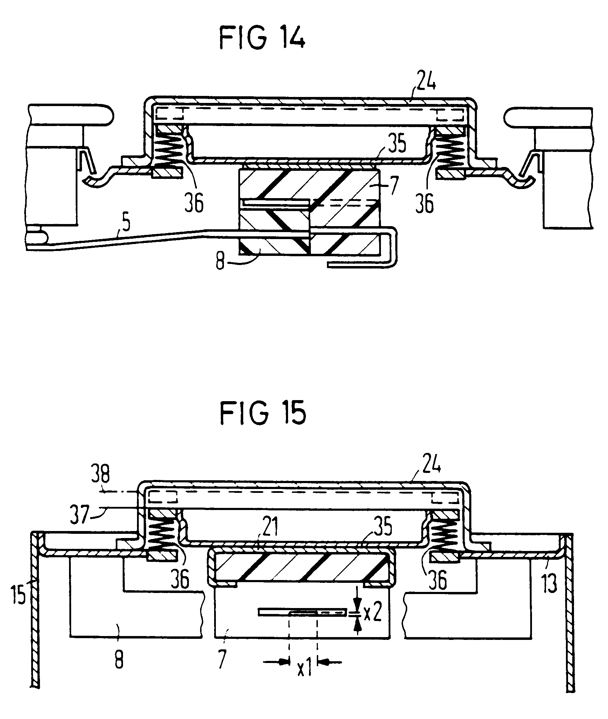

In den FIG 14 und 15 sind Ausführungsformen dargestellt, bei denen das bewegliche Kunststoffteil 7 an einem Metallbalgboden 35 befestigt ist, der durch Membranbälge oder gewellte Metallbälge 36 vorgespannt 37 bzw. entspannt 38 ist.

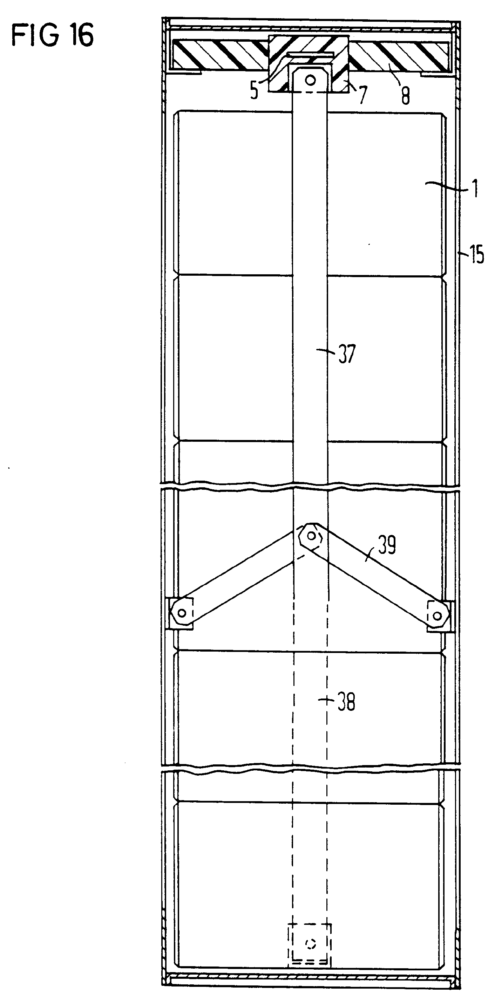

In der FIG 16 ist eine Ausführungsform dargestellt, in der die Abschaltvorrichtung durch ein Gestänge 37 mit einer Zugstange 38 aus Flachprofil (Blech), Kunststoff oder isoliertem Metall betätigt wird, wobei das Gestänge 37 Anbindungen 39 an die großen Seitenflächen des Kondensatorgehäuses 15 besitzt. Bei Ausbauchung der Seitenflächen führt das bewegliche Kunststoffteil 7 eine Relativbewegung gegenüber dem feststehenden Kunststoffteil 8 aus, so daß die metallische Leitung 5 im Bereich der Soll-Trennstelle abgeschert wird.

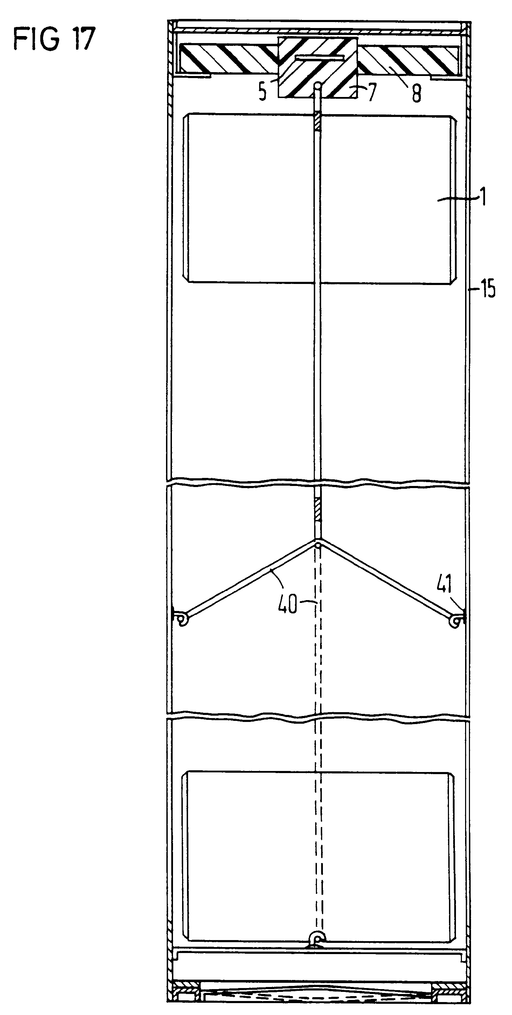

Die FIG 17 zeigt eine Abschaltvorrichtung, die durch ein Seil oder Draht bzw. ein Rundprofil 40 aus Metall, isoliert oder aus Kunststoff betätigt wird, die an einem angeschweißten Haken oder Blechwinkel 41 an der großen Seitenfläche des Kondensatorgehäuses 15 befestigt ist. Bei Ausbauchung der Seitenflächen führt das bewegliche Kunststoffteil 7 eine Relativbewegung gegenüber dem feststehenden Kunststoffteil 8 aus, so daß die metallische Leitung 5 im Bereich der Soll-Trennstelle abgeschert wird.

Die in den Figuren dargestellte Membran kann nicht nur aus Stahl/Edelstahl, sondern auch aus Buntmetall (z. B. Messing, Neusilber, Bronze usw.), Aluminium oder aus kupferplattierten (ein- oder beidseitig) Aluminium-Blechen gefertigt werden.

Wird die Membran mit dem angefügten Kunststoffteil mit Druck beaufschlagt, springt bei Erreichen des Ansprechdruckes (z. B. 1 bis 1,5 bar) das Blech von der Ausgangsstellung plötzlich und schnell in Abschaltposition, schert dabei den Sicherungsquerschnitt (x₁, x₂ bzw. y₁, y₂) ab und stellt aufgrund des Snap-Effektes auch eine gewünschte Isolationsstrecke (z. B. 5 mm) zwischen den unterbrochenen Leitungsteilen dar.

Das Sicherungssystem hat somit folgende vorteilhafte Eigenschaften:
1. Einen flachen, geringvolumigen Aufbau (ca. 20 mm hoch bzw. nur 5 mm über innere Keramikabmessungen stehend),
2. einen geringeren Ansprechdruck bei sicherer Trennung (große Isolierstrecke zwischen unterbrochenen Leitungsteilen),
3. einen geringen Aufwand, d. h. neben der metallischen Leitungen nur zwei Kunststoffteile und eine einfache Membran,
4. geringe Montagekosten (z. B. nur zwei Steckvorgänge und ein Klebevorgang ist notwendig.

Um den Abschaltdruck weiter verringern zu können, kann durch Anbringen eines Federelements wie z. B. einer Blatt- oder Spiralfeder eine Vorspannung im System Membran/Leitungsteil erzeugt werden, so daß nur noch eine Kraft bzw. Abschaltdruck in der Höhe aufgebracht werden muß, welche der Differenz aus Federkraft zur Summe Membranansprechkraft + Abscherkraft entspricht. Wenn beispielsweise zum Abscheren des Leitungsteils 500 N und zum Schalten der Membran ebenfalls 500 N, d. h. zusammen 1000 N, benötigt werden, dann werden bei einer auf z. B. 800 N vorgespannten Feder nur noch 200 N zum Abschalten bzw. zum "Snappen" der Membran benötigt. Entsprechend sinkt der Schaltdruck auf 20 % des ursprünglichen Wertes, wobei je nach Auslegung der Feder ein gewünschter Ansprechdruck gezielt eingestellt werden kann.

Eine derartige Vorspannung kann auch durch Anwendung von entsprechend dimensionierten Bälgen (Metallbälge, Membranbälge) bzw. Wellen- oder Rillenmembranen auch ohne Feder erzeugt werden, da diese Elemente selbst wie Federn wirken und deshalb vorgespannt eingebaut werden können.

## Patentansprüche

1. Elektrischer Kondensator, der in ein, insbesondere rechteckförmiges, Gehäuse eingebaut ist, das eine Sicherung aufweist, die den Kondensator bei einem Druckanstieg im Gehäuse von einem äußeren Stromkreis freischaltet, indem eine im Inneren des Gehäuses angeordnete metallische Leitung an einer Soll-Trennstelle aufgetrennt wird,
**dadurch gekennzeichnet**,
daß die metallische Leitung (5) zwischen zwei mit Scherkanten (11) versehenen Kunststoffteilen (7,8) gehaltert ist, die bei einem Druckanstieg im Gehäuse (15) eine Relativbewegung gegeneinander ausführen derart, daß die metallische Leitung (5) an der im Bereich der Scherkanten (11) angeordneten Soll-Trennstelle (19) durchtrennt wird.

2. Elektrischer Kondensator nach Anspruch 1,
**dadurch gekennzeichnet**,
daß das eine Teil (7) an einer sich unter Druck verformenden Fläche des Kondensatorgehäuses (15) befestigt ist und daß das andere Teil (8) feststehend gegenüber der sich verformenden Fläche angeordnet ist.

3. Elektrischer Kondensator nach Anspruch 2,
**dadurch gekennzeichnet**,
daß das beweglich angeordnete Teil (7) an einem druckabhängigen Triebelement befestigt ist.

4. Elektrischer Kondensator nach Anspruch 3,
**dadurch gekennzeichnet**,
daß das Triebelement aus einer eingeschweißten oder eingelöteten Membran, einem Snap-Blech oder Bälgen besteht.

5. Elektrischer Kondensator nach Anspruch 4,
**dadurch gekennzeichnet**,
daß das Triebelement aus Stahl, Edelstahl, Buntmetallen (wie Messing, Neusilber, Bronze) Aluminium oder aus ein- bzw. zweiseitig mit Kupfer plattierten Aluminium-Blechen besteht.

6. Elektrischer Kondensator nach Anspruch 3,
**dadurch gekennzeichnet**,
daß zur Verringerung des Abschaltdrucks ein Federelement am Triebelement angeordnet ist.

7. Elektrischer Kondensator nach Anspruch 2,
**dadurch gekennzeichnet**,
daß die Kraftübertragung auf das beweglich angeordnete Teil (7) über an den großen Seitenflächen oder dem Boden des Gehäuses (15) befestigten Gestängen (37, 38, 39) oder Seilzügen (40) erfolgt.

8. Elektrischer Kondensator nach einem der Ansprüche 1 bis 7,
**dadurch gekennzeichnet**,
daß die Teile (7, 8) aus Kunststoff bestehen.

9. Elektrischer Kondensator nach einem der Ansprüche 1 bis 8,
**dadurch gekennzeichnet**,
daß die metallische Leitung (5) aus Elektro-Kupfer besteht.

## Claims

1. Electrical capacitor which is installed in a housing, preferably a rectangular housing, which has a safety device which disconnects the capacitor from an external circuit in the event of a pressure rise in the housing, in that a metallic lead which is arranged in the interior of the housing is disconnected at a weak point, characterized in that the metallic lead (5) is held between two plastic parts (7, 8) which are provided with shear edges (11) and carry out a relative movement with respect to one another in the event of a pressure rise in the housing (15), in such a manner that the metallic lead (5) is cut through at the weak point (19) which is arranged in the region of the shear edges (11).

2. Electrical capacitor according to Claim 1, characterized in that one part (7) is mounted on a surface, which deforms under pressure, of the capacitor housing (15), and in that the other part (8) is arranged in a fixed manner with respect to the deforming surface.

3. Electrical capacitor according to Claim 2, characterized in that the part (7) which is arranged in a moving manner is mounted on a pressure-dependent drive element.

4. Electrical capacitor according to Claim 3, characterized in that the drive element comprises a welded-in or soldered-in diaphragm, a snap-action metal sheet or bellows.

5. Electrical capacitor according to Claim 4, characterized in that the drive element is composed of steel, stainless steel, non ferrous metals (such as brass, nickel silver, bronze) aluminium or of aluminium metal sheets plated with copper or one or two sides.

6. Electrical capacitor according to Claim 3, characterized in that a spring element is arranged on the drive element, in order to reduce the disconnection pressure.

7. Electrical capacitor according to Claim 2, characterized in that the force transmission to the part (7) which is arranged in a moving manner is effected via linkages (37, 38, 39) or cable trains (40) which are mounted on the large side surfaces or the base of the housing (15).

8. Electrical capacitor according to one of Claims 1 to 7, characterized in that the parts (7, 8) are composed of plastic.

9. Electrical capacitor according to one of Claims 1 to 8, characterized in that the metallic lead (5) is composed of electrical-grade copper.

## Revendications

1. Condensateur électrique, qui est monté dans un boîtier notamment de forme rectangulaire, qui possède un dispositif de sécurité, qui déconnecte le condensateur d'un circuit extérieur lorsque la pression dans le boîtier augmente, par le fait qu'un conducteur métallique disposé à l'intérieur du boîtier est rompu à un point de rupture de consigne, caractérisé par le fait que le conducteur métallique (5) est retenu entre deux pièces en matière plastique (7,8), qui comportent des arêtes de cisaillement (11) et qui exécutent un déplacement relatif lorsque la pression dans le boîtier (15) augmente de sorte que le conducteur métallique (5) soit sectionné au point de rupture de consigne (19) disposé dans la zone des arêtes de cisaillement (11).

2. Condensateur électrique suivant la revendication 1, caractérisé par le fait qu'une partie (7) est fixée sur une surface, qui se déforme sous l'action d'une pression, du boîtier (15) du condensateur et que l'autre partie (8) est montée fixe par rapport à la surface qui se déforme.

3. Condensateur électrique suivant la revendication 2, caractérisé par le fait que la partie mobile (7) est fixée à un élément d'entraînement qui entre en action en fonction de la pression.

4. Condensateur électrique suivant la revendication 3, caractérisé par le fait que l'élément d'entraînement est constitué d'une membrane fixée par soudage ou brasage, d'une tôle à encliquetage brusque ou de soufflets.

5. Condensateur électrique suivant la revendication 4, caractérisé par le fait que l'élément d'entraînement est en acier, en acier fin, en métaux alliés (comme le laiton, l'argentan, le bronze), en aluminium ou en tôles d'aluminium portant un placage en cuivre sur une face ou sur leurs deux faces.

6. Condensateur électrique suivant la revendication 3, caractérisé par le fait qu'un élément élastique est disposé sur l'élément d'entraînement pour réduire la pression de déconnexion.

7. Condensateur électrique suivant la revendication 2, caractérisé par le fait que la transmission de force à la partie mobile (7) s'effectue par l'intermédiaire de tringleries (37,38,39) ou de câbles de traction (40) fixés aux grandes faces latérales ou au fond du boîtier (15).

8. Condensateur électrique suivant l'une des revendications 1 à 7, caractérisé par le fait que les parties (7,8) sont en matière plastique.

9. Condensateur électrique suivant l'une des revendications 1 à 8, caractérisé par le fait que le condensateur métallique (5) est en cuivre électrolytique.
